# EUROPEAN PATENT SPECIFICATION

(11) **EP 3 270 627 B1**
(45) Date of publication and mention of the grant of the patent: **24.11.2021**
(21) Application number: 16179493.8
(22) Date of filing: 14.07.2016
(51) Int. Cl.: H04W 16/14

(54) **A NETWORK ENTITY FOR ASSIGNING FREQUENCY SPECTRUM FOR COMMUNICATION WITHIN A MOBILE COMMUNICATION NETWORK**
NETZWERKEINHEIT ZUR ZUWEISUNG EINES FREQUENZSPEKTRUMS ZUR KOMMUNIKATION INNERHALB EINES MOBILKOMMUNIKATIONSNETZWERKS
ENTITÉ DE RÉSEAU POUR L'ATTRIBUTION DE SPECTRE DE FRÉQUENCES DE COMMUNICATION DANS UN RÉSEAU DE COMMUNICATION MOBILE

(43) Date of publication of application: 17.01.2018
(73) Proprietor: Deutsche Telekom AG, 53113 Bonn (DE)
(72) Inventor: Rosowski, Thomas, 64347 Griesheim (DE); Zimmermann, Gerd, 64331 Weiterstadt (DE)
(74) Representative: Vossius & Partner Patentanwälte Rechtsanwälte mbB

(56) References cited:
- Deliverable D5 Metis: "Document Number: ICT-317669-METIS/D5.4 Project Name: Mobile and wireless communications Enablers for the Twenty-twenty Information Society (METIS)", , 30 April 2015 (2015-04-30), XP055314246, Retrieved from the Internet: URL:https://www.metis2020.com/wp-content/u ploads/deliverables/METIS_D5.4_v1.pdf [retrieved on 2016-10-26]
- Deliverable D6 Metis: "Project Name: Mobile and wireless communications Enablers for the Twenty-twenty Information Society (METIS)", , 30 April 2015 (2015-04-30), XP055314202, Retrieved from the Internet: URL:https://www.metis2020.com/wp-content/u ploads/deliverables/METIS_D6.6_v1.pdf [retrieved on 2016-10-26]
- Deliverable D5 Metis: "Document Number: ICT-317669-METIS/D5.3 Project Name: Mobile and wireless communications Enablers for the Twenty-twenty Information Society (METIS)", , 29 August 2014 (2014-08-29), XP055314238, Retrieved from the Internet: URL:https://www.metis2020.com/wp-content/u ploads/deliverables/METIS_D5.3_v1.pdf [retrieved on 2016-10-26]

## Description

### TECHNICAL FIELD

The present invention relates to the field of spectrum management within a mobile communication network of a network operator.

### TECHNICAL BACKGROUND

Fifth generation (5G) mobile communication networks have to cope with mobile data rates and availability requirements in challenging dimensions. In addition to mobile broadband applications for the public, also services currently operated via separate dedicated wireless networks, e.g. public protection and disaster relief (PPDR) and transport and traffic telematics (TTT), as well as needs from new user groups like users from the energy sector, the factory sector, or the health sector, are to be considered in the design of a 5G mobile communication network.

There is a common understanding among research and standardization bodies that diverging requirements in this context can roughly be grouped into three categories. The first category relates to extreme mobile broadband (xMBB) services with high throughputs as well as low-latency requirements, and high coverage requirements with reliable moderate data rates within the coverage area. The second category relates to massive machine-type communication (mMTC) services with wireless connectivity for tens of billions of network-enabled devices with prioritization on wide-area coverage and deep indoor penetration. The third category relates to ultra-reliable machine-type communication (uMTC) services with ultra-reliable low-latency and/or resilient communication links.

Further investigations indicate that diverging requirements of different communication services, such as the requirements of the aforementioned communication services, may not be fulfilled by increasing the density of mobile communication networks and the spectral efficiency of radio access technologies alone. Therefore, also additional frequency bands, in particular allowing for wide channel bandwidth operations, are supposed to be made available for future mobile communication networks.

Currently available spectrum management techniques, however, are not capable of efficiently managing and assigning frequency spectrum according to such diverging requirements of different communication services.

In Deliverable D5.4, "Future spectrum system concept", Mobile and wireless communications Enablers for the Twenty-twenty Information Society (METIS), ICT-317669-METIS/D5.4, a functional architecture for spectrum management is described, wherein the functional architecture comprises a spectrum controller (SC) being connected to a radio resource management (RRM) of a mobile communication network.

In Deliverable D6.6, "Final report on the METIS 5G system concept and technology roadmap", Mobile and wireless communications Enablers for the Twenty-twenty Information Society (METIS), ICT-317669-METIS/D6.6, a system concept for fifth generation (5G) mobile communication networks is described.

### SUMMARY

It is an object of the invention to provide an efficient concept for spectrum management within a mobile communication network.

This object is achieved by the features of the independent claims. Further implementation forms are apparent from the dependent claims, the description and the figures.

The invention is based on the finding that a network entity comprising a central spectrum assignment coordination (SAC) entity which takes a final frequency spectrum assignment decision, supported by a service-specific spectrum requirements (SSR) entity for providing information on service-specific requirements, a spectrum resource storage (SRS) entity for providing information on frequency band availability, and a spectrum usage rules (SUR) entity comprising a spectrum access modes (SAM) entity and a network deployment scenarios (NDS) entity implementing a spectrum management policy of a network operator, can be used for spectrum management within a mobile communication network.

Furthermore, the network entity can comprise a spectrum sharing enablers (SSE) entity and an inter-operator coordination functions (ICF) entity serving as corresponding spectrum usage tools. The service-specific spectrum requirements (SSR) entity, the spectrum resource storage (SRS) entity, the spectrum usage rules (SUR) entity comprising the spectrum access modes (SAM) entity and the network deployment scenarios (NDS) entity, the spectrum sharing enablers (SSE) entity, and the inter-operator coordination functions (ICF) entity can each comprise a database. The signals exchanged between the entities can be formed by messages.

The spectrum assignment coordination (SAC) entity can be connected to a radio resource management (RRM) entity of a network operator via a spectrum management to radio resource management interface (SR-IF). In addition, the spectrum assignment coordination (SAC) entity can be connected to external entities, such as a further spectrum assignment coordination (SAC) entity of another network operator or a regulatory spectrum coordination (RSC) entity at a regulator. The interface between the spectrum assignment coordination (SAC) entity and the further spectrum assignment coordination (SAC) entity, denoted as inter-operator interface (IO-IF), and the interface between the spectrum assignment coordination (SAC) entity and the regulatory spectrum coordination (RSC) entity, denoted as operator-regulator interface (OR-IF), can be used in order to facilitate cross-operator operation and data exchange on frequency spectrum assignment requests and assignments as well as regulatory requirements.

In summary, an efficient spectrum management architecture for assigning frequency spectrum for communication within a mobile communication network is realized. With regard to spectrum management for fifth generation (5G) mobile communication networks, numerous frequency bands within a wide range of frequency spectrum possibly using different spectrum access modes, e.g. licensed and/or shared spectrum access modes, can be managed and diverging service-specific requirements, e.g. for different user groups, can efficiently be met. The assignment of the frequency spectrum can comprise an assignment of one or more frequency bands for communication within the mobile communication network.

The invention can be implemented in hardware and/or software.

### BRIEF DESCRIPTION OF THE FIGURES

Implementation forms of the invention will be described with respect to the following figures, in which:
Fig. 1 shows a network entity for assigning frequency spectrum for communication within a mobile communication network;
Fig. 2 shows a method for assigning frequency spectrum for communication within a mobile communication network using a network entity;
Fig. 3 shows a network entity for assigning frequency spectrum for communication within a mobile communication network, having interfaces to internal and external functional entities;
Fig. 4 shows a mapping table for mapping a communication service, use case or application onto associated service-specific requirements, available frequency bands, spectrum access modes, network deployment scenarios, spectrum sharing modes, and inter-operator spectrum utilization modes;
Fig. 5 shows a method for assigning frequency spectrum for communication within a mobile communication network using a network entity, in a dense urban environment;
Fig. 6 shows a method for assigning frequency spectrum for communication within a mobile communication network using a network entity, for a smart grid in a rural area; and
Fig. 7 shows a method for assigning frequency spectrum for communication within a mobile communication network using a network entity, for traffic efficiency and safety applications.

### DETAILED DESCRIPTION OF THE FIGURES

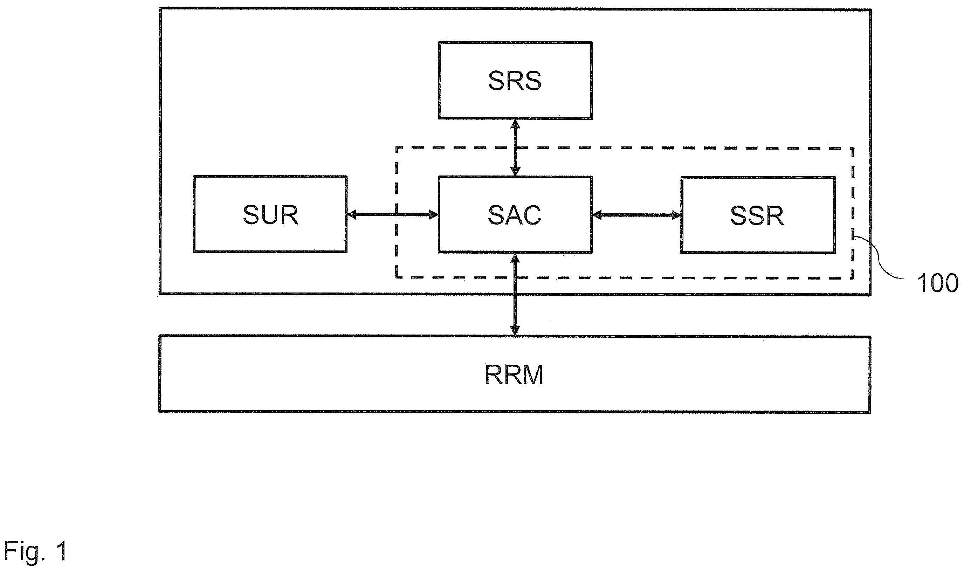

Fig. 1 shows a network entity 100 for assigning frequency spectrum for communication within a mobile communication network. The communication within the mobile communication network is to be performed according to a requested communication service of a plurality of communication services.

The network entity 100 comprises a service-specific spectrum requirements (SSR) entity configured to store a predetermined mapping between a plurality of service-specific requirements and the plurality of communication services, wherein each communication service is associated with at least one service-specific requirement.

The network entity 100 further comprises a spectrum assignment coordination (SAC) entity configured to receive a spectrum assignment request signal from a radio resource management (RRM) entity, the spectrum assignment request signal indicating the requested communication service, to retrieve a service-specific requirement corresponding to the requested communication service from the service-specific spectrum requirements (SSR) entity, to determine the frequency spectrum upon the basis of the requested communication service and the retrieved service-specific requirement, to generate a spectrum assignment answer signal indicating the determined frequency spectrum, and to transmit the spectrum assignment answer signal to the radio resource management (RRM) entity for assigning the frequency spectrum for the communication within the mobile communication network.

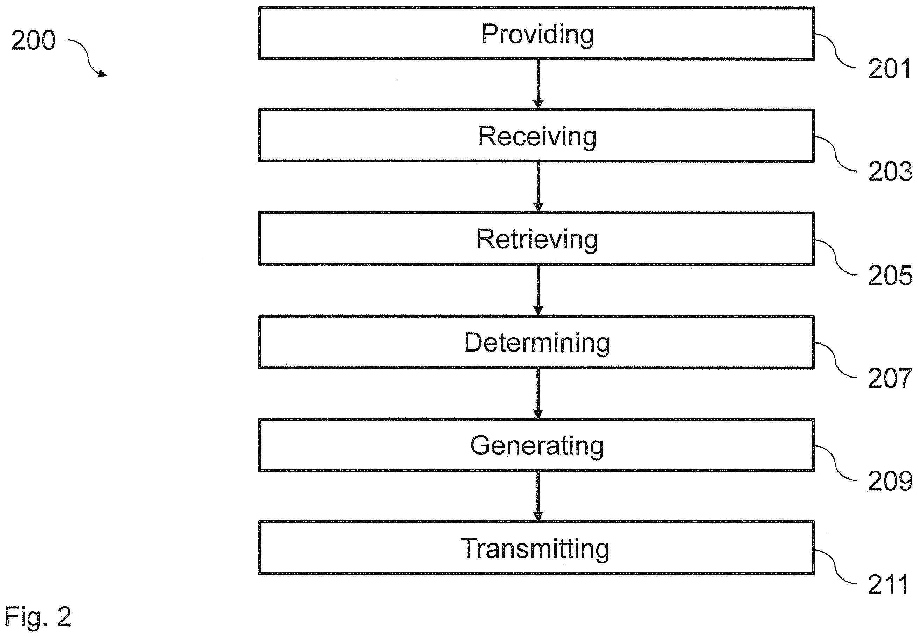

Fig. 2 shows a method 200 for assigning frequency spectrum for communication within a mobile communication network using a network entity. The network entity comprises a service-specific spectrum requirements (SSR) entity and a spectrum assignment coordination (SAC) entity. The communication within the mobile communication network is to be performed according to a requested communication service of a plurality of communication services.

The method 200 comprises providing 201 a predetermined mapping between a plurality of service-specific requirements and the plurality of communication services by the service-specific spectrum requirements (SSR) entity, wherein each communication service is associated with at least one service-specific requirement, receiving 203 a spectrum assignment request signal from a radio resource management (RRM) entity by the spectrum assignment coordination (SAC) entity, the spectrum assignment request signal indicating the requested communication service, retrieving 205 a service-specific requirement corresponding to the requested communication service from the service-specific spectrum requirements (SSR) entity by the spectrum assignment coordination (SAC) entity, determining 207 the frequency spectrum upon the basis of the requested communication service and the retrieved service-specific requirement by the spectrum assignment coordination (SAC) entity, generating 209 a spectrum assignment answer signal indicating the determined frequency spectrum by the spectrum assignment coordination (SAC) entity, and transmitting 211 the spectrum assignment answer signal to the radio resource management (RRM) entity by the spectrum assignment coordination (SAC) entity for assigning the frequency spectrum for the communication within the mobile communication network.

In the following, the different functional entities for spectrum management of the network operator as well as interfaces to external functional entities are described in more detail.

The processing of information and selected spectrum usage options within the central spectrum assignment coordination (SAC) entity in interaction with further functional entities within the spectrum management of the network operator is illustrated for dedicated services, use cases and applications. The interworking between the spectrum assignment coordination (SAC) entity and the further functional entities outside the spectrum management of the network operator is illustrated by sequence charts for representative spectrum usage scenarios.

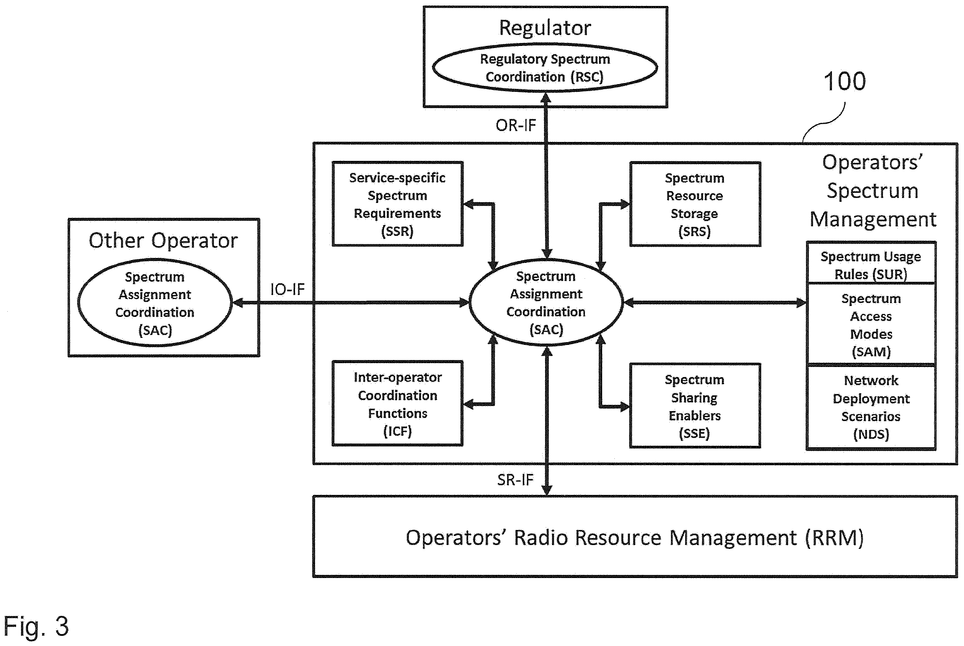

Fig. 3 shows a network entity 100 for assigning frequency spectrum for communication within a mobile communication network. The diagram illustrates a holistic spectrum management architecture for spectrum management of a network operator using a central spectrum assignment coordination (SAC) entity having interfaces to internal and external functional entities.

The central spectrum assignment coordination (SAC) entity takes the final frequency spectrum assignment decision, supported by the service-specific spectrum requirements (SSR) entity and the spectrum resource storage (SRS) entity for providing information on service-specific requirements and frequency band availability, the spectrum usage rules (SUR) entity encompassing the spectrum access modes (SAM) entity and the network deployment scenarios (NDS) entity comprising information on the spectrum management policy of the network operator, and the spectrum sharing enablers (SSE) entity and the inter-operator coordination functions (ICF) entity as corresponding spectrum usage tools in order to perform this task. Interfaces between the spectrum assignment coordination (SAC) entity and external entities at other network operators, i.e. an inter-operator interface (IO-IF), and at the regulator, i.e. an operator-regulator interface (OR-IF), can be used in order to facilitate cross-operator operation and data exchange on frequency spectrum assignment requests and assignments as well as regulatory requirements. The spectrum assignment coordination (SAC) entity can further be connected with the radio resource management (RRM) entity of the network operator via a spectrum management to radio resource management interface (SR-IF).

The spectrum assignment coordination (SAC) entity can process information from internal and external functional entities and takes finally the frequency spectrum assignment decision for a dedicated requested service, use case or application. This frequency spectrum assignment decision can be communicated to the radio resource management (RRM) entity which can be responsible for using the assigned frequency spectrum resources in an efficient manner, e.g. by controlling relevant communication parameters such as transmit power, modulation scheme, or resource block allocation.

The service-specific spectrum requirements (SSR) entity can comprise a database comprising information on service-specific requirements related to a specific communication service, use case or application for which a frequency spectrum assignment is requested.

The retrieved service-specific requirement can e.g. indicate a high, a medium, or a low
- availability,
- capacity,
- coverage,
- mobility, and/or
- reliability
associated with the requested communication service, use case or application.

The service-specific requirements are to be taken into account in the frequency spectrum assignment performed by the spectrum assignment coordination (SAC) entity.

The spectrum resource storage (SRS) entity can comprise a database indicating all available frequency bands in the mobile communication network of the network operator. The available frequency bands can comprise frequency bands individually licensed to the network operator, but also spectrum usage options like shared spectrum access to license-exempt frequency bands or to frequency bands used by other incumbents in a licensed shared access (LSA) mode, and also frequency bands dedicated to a specific communication service or application like intelligent transportation systems (ITS) or public protection and disaster relief (PPDR). In addition, frequency bands available based on inter-operator cooperation, e.g. mutual renting including cross-operator D2D communications or spectrum pooling, as e.g. described in conjunction with the inter-operator coordination functions (ICF) entity, can be covered.

The frequency spectrum can be determined subject to information retrieved from the service-specific spectrum requirements (SSR) entity. Also the information retrieved from the network deployment scenarios (NDS) entity can be relevant in this context.

One can, for instance, roughly distinguish between frequency bands
- below 1 GHz for rural coverage,
- between 1 GHz and 3 GHz for urban coverage,
- between 3 GHz and 30 GHz for outdoor and indoor capacity increase, and
- above 30 GHz for mainly indoor capacity increase.
associated with the requested communication service, use case or application.

The spectrum usage rules (SUR) entity can comprise two entities, namely the spectrum access modes (SAM) entity and the network deployment scenarios (NDS) entity, wherein each of the aforementioned entities can comprise a database. These entities can comprise information about the overall spectrum management policy of the network operator with regard to spectrum access and network deployment.

Within the spectrum access modes (SAM) entity, a database comprising information about spectrum access modes can be provided. Subject to service-specific, e.g. user-specific, spectrum requirements, in particular with respect to availability and/or reliability requirements, the corresponding spectrum access mode can be selected. Also, the overall spectrum management policy of the network operator can be considered.

A spectrum access mode can e.g. be
- an exclusive spectrum access mode,
- a shared spectrum access mode comprising
   - a license-exempt access mode, e.g. for license assisted access (LAA) or WiFi,
   - a licensed shared access (LSA) mode, and
- a service dedicated spectrum access mode, e.g. for intelligent transportation systems (ITS) or public protection and disaster relief (PPDR).

Within the network deployment scenarios (NDS) entity, a database comprising information about network deployment scenarios within the mobile communication network can be provided. Depending on a location of a user equipment (UE) of a user, an applicable network deployment scenario can be taken into account for the spectrum assignment decision within the spectrum assignment coordination (SAC) entity.

Possible network deployment scenarios can e.g. comprise
- a rural macro cell (RMC) scenario,
- an urban macro cell (UMC) scenario,
- an outdoor small cell (OSC) scenario,
- an indoor small cell (ISC) scenario,
- a nomadic node (NN) scenario, and
- a device-to-device (D2D) scenario, including a vehicle-to-vehicle (V2V) and a machine-to-machine (M2M) scenario.

The spectrum sharing enablers (SSE) entity can be used to facilitate operation in shared spectrum bands, for example access to license-exempt frequency bands or to frequency bands used by other incumbents by selecting the licensed shared access (LSA) mode.

In such cases, the following functionalities may e.g. be activated:
- mitigation techniques for license-exempt spectrum usage, e.g. for listen before talk (LBT), digital communication system (DCS) / dynamic frequency selection (DFS), transmitter power control (TPC), duty-cycle adjustment, and
- licensed shared access (LSA) operation support, including geolocation database (GLDB) support.

The inter-operator coordination functions (ICF) entity can enable mutual spectrum utilization among different network operators.

The following common usage scenarios may e.g. be envisaged:
- mutual renting, whereby a network operator rents unused frequency bands or resources to other network operators as long as not assigned within the own mobile communication network;
- spectrum pooling, whereby the regulator gives authorization to several network operators to access a frequency band. This can allow participating network operators to use up to the whole frequency band on a shared basis according to the rules to which frequency bands or resources are distributed among licensees inside the spectrum pool; and
- cross-operator D2D operation. This can imply an in-band overlay spectrum between network operators sharing wherein a part of a cellular uplink spectrum can be allocated exclusively to device-to-device (D2D) communication. Depending on the amount of D2D users and cellular users, the spectrum can automatically be divided among them.

The dedicated selection can be subject to operational requirements within the mobile communication network.

The spectrum assignment coordination (SAC) entity can communicate with the radio resource management (RRM) entity, the regulatory spectrum coordination (RSC) entity and the further spectrum assignment coordination (SAC) entity of one or more other network operators, using different interfaces.

The interface between the network operator and the regulator, i.e. the operator to regulator interface (OR-IF), enables an exchange of data on frequency spectrum assignment requests and assignments as well as on regulatory requirements. This interface is used for operation e.g. in the licensed shared access (LSA) mode and within service dedicated spectrum modes, e.g. for intelligent transportation systems (ITS) or public protection and disaster relief (PPDR).

The interface between different network operators, i.e. the inter-operator interface (IO-IF), connects spectrum assignment coordination (SAC) entities of different network operators and thus facilitates an exchange of data used for inter-operator coordination. This interface can e.g. be used in cases where mutual renting, spectrum pooling and/or cross-operator D2D operation is applied.

Furthermore, an interface between the spectrum management of the network operator and the radio resource management (RRM) entity, i.e. a spectrum management to radio resource management interface (SR-IF), can be used. Over the SR-IF data relating to frequency spectrum assignment, frequency resource availability and interference can be exchanged. In particular, the spectrum assignment coordination (SAC) entity can inform the radio resource management (RRM) entity about respective frequency spectrum assignment decisions in response to a respective request, and the spectrum assignment coordination (SAC) entity can receive information from the radio resource management (RRM) entity on an actual frequency resource usage and about an interference situation within the mobile communication network.

Specific use cases and applications can be associated with a communication service. Dedicated applications can be collated e.g. to the following use cases:
- use case 1: dense urban information society; covering connectivity by humans and machines in dense urban environments at any place and at any time, including both indoor and outdoor environments;
- use case 2: virtual reality office; facilitating interactive video communication for personal as well as professional use;
- use case 3: broadband access everywhere; supporting a minimum experienced user throughput which may be guaranteed everywhere;
- use case 4: massive distribution of sensors and actuators; coping with massive deployment of low cost and of low energy consumption devices; and
- use case 5: connected cars; enabling traffic safety and efficiency, and real-time remote services.

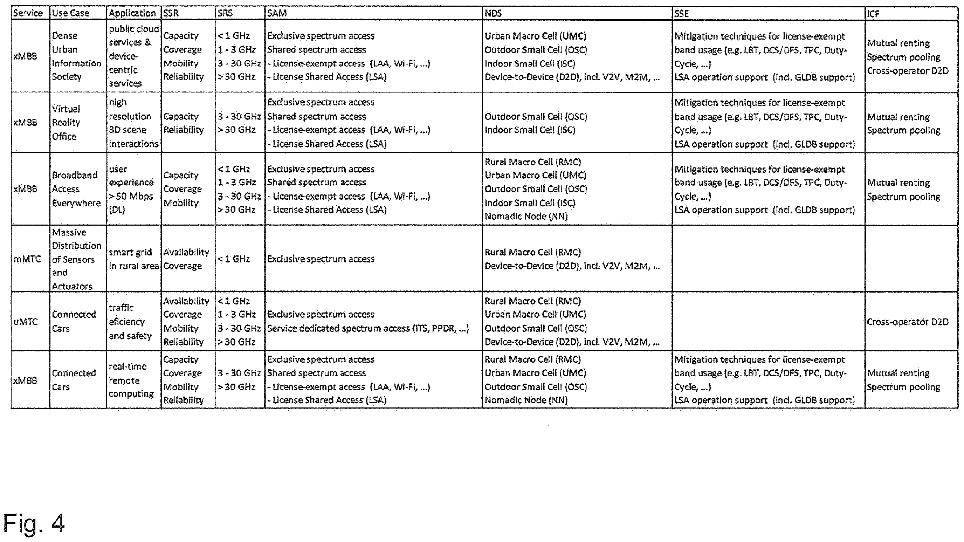

Fig. 4 shows a mapping table for mapping a communication service, use case or application onto associated service-specific requirements, available frequency bands, spectrum access modes, network deployment scenarios, spectrum sharing modes, and inter-operator spectrum utilization modes. The table illustrates exemplary mappings of relevant information and selected spectrum usage options for use by the spectrum assignment coordination (SAC) entity in interaction with the functional entities within the spectrum management of the network operator for dedicated communication services, use cases and applications.

Based on the spectrum usage options selected by the functional entities within the spectrum management of the network operator, the spectrum assignment coordination (SAC) entity performs a frequency spectrum assignment to be communicated to the radio resource management (RRM) entity of the network operator, or initiates further coordination with the functional entities outside the spectrum management of the network operator, e.g. with another network operator or with the regulator, before a final frequency spectrum assignment decision may be taken.

The communication services can e.g. be grouped into different categories. The first category relates to extreme mobile broadband (xMBB) services with high throughputs as well as low-latency requirements, and high coverage requirements with reliable moderate rates within the coverage area. This service category may necessitate a mixture of frequency spectrum comprising lower frequency bands for coverage, and higher frequency bands having a large contiguous bandwidth in order to cope with the capacity requirement, including wireless backhaul solutions. The second category relates to massive machine-type communication (mMTC) services with wireless connectivity for tens of billions of network-enabled devices with prioritization on wide area coverage and deep indoor penetration. These requirements may be fulfilled in particular by using frequency bands below 1 GHz. The third category relates to ultra-reliable machine-type communication (uMTC) services with ultra-reliable low-latency and/or resilient communication links. For such purposes, dedicated frequency bands may be considered necessary, whereas the employed frequency range may depend on the field of application.

The diverging requirements of these communication services may not be fulfilled by increasing the density of mobile communication networks and the spectral efficiency of radio access technologies alone. Therefore, also additional frequency bands, in particular allowing for wide channel bandwidth operations are supposed to be made available. Besides using spectrum exclusively available for mobile communications, also spectrum sharing, e.g. licensed shared access (LSA) in frequency bands occupied by other incumbents, operation in unlicensed frequency bands as well as mutual usage of spectrum among network operators, can offer means to complement the overall frequency band availability. The spectrum management architecture is capable to deal with the above mentioned challenges.

As an example, a massive machine-type communication (mMTC) service as requested communication service is considered. The requested communication service can relate to a massive distribution of sensors and actuators as requested use case and/or to a smart grid in rural areas as requested application. The described example corresponds to the fourth row of the mapping table.

For the requested communication service, requested use case and/or requested application, availability and coverage as service-specific requirements are stored within the service-specific spectrum requirements (SSR) entity, and the use of frequency bands below 1 GHz is indicated within the spectrum resource storage (SRS) entity. Within the spectrum access modes (SAM) entity an exclusive spectrum access as spectrum access mode is stored, and a rural macro cell (RMC) scenario and a device-to-device (D2D) scenario, including a vehicle-to-vehicle (V2V) scenario and/or a machine-to-machine (M2M) scenario, as network deployment scenarios are stored within the network deployment scenarios (NDS) entity. Within the spectrum sharing enablers (SSE) entity and the inter-operator coordination functions (ICF) entity, no further information is stored as shared spectrum access (see SAM) may not apply.

The spectrum assignment coordination (SAC) entity can determine the suitable frequency spectrum according to the requested communication service, requested use case and/or requested application upon the basis of the retrieved service-specific requirements, the retrieved available frequency band, the retrieved spectrum access mode and the retrieved network deployment scenarios. The determined frequency spectrum, i.e. the determined frequency band or bands, can allow for meeting all of the aforementioned criteria.

For determining dedicated exclusive frequency spectrum below 1 GHz, the following factors may be taken into account: availability of a corresponding license, available infrastructure in the desired coverage area, technological support of the specific communication service, e.g. narrow-band Internet of Things (NB-IoT), and/or current utilization of the frequency spectrum. For example, frequency bands around 450 MHz, 700 MHz, 800 MHz, or 900 MHz may be applicable.

As another example, an ultra-reliable machine-type communication (uMTC) service as requested communication service is considered. The requested communication service can relate to connected cars as requested use case and/or traffic safety as requested application. The described example corresponds to the fifth row of the mapping table.

For the requested communication service, requested use case and/or requested application, availability, coverage, mobility and reliability as service-specific requirements are stored within the service-specific spectrum requirements (SSR) entity, and the use of frequency bands from below 1 GHz up to above 30 GHz is indicated within the spectrum resource storage (SRS) entity. Within the spectrum access modes (SAM) entity a service dedicated spectrum access as spectrum access mode may apply for traffic safety applications. Irrespective of further information in the mapping table applying for both, traffic efficiency and traffic safety or only to traffic safety (see Fig. 4), the ITS spectrum band 5875-5905 MHz may be a respective option.

The spectrum assignment coordination (SAC) entity can determine the suitable frequency spectrum according to the requested communication service, requested use case and/or requested application upon the basis of the retrieved service-specific requirements, and the retrieved available frequency band. Further coordination with the regulatory spectrum coordination (RSC) entity at the regulator via the operator to regulator interface (OR-IF) may apply in this example. The determined frequency spectrum, i.e. the determined frequency band or bands, can allow for meeting all of the aforementioned criteria.

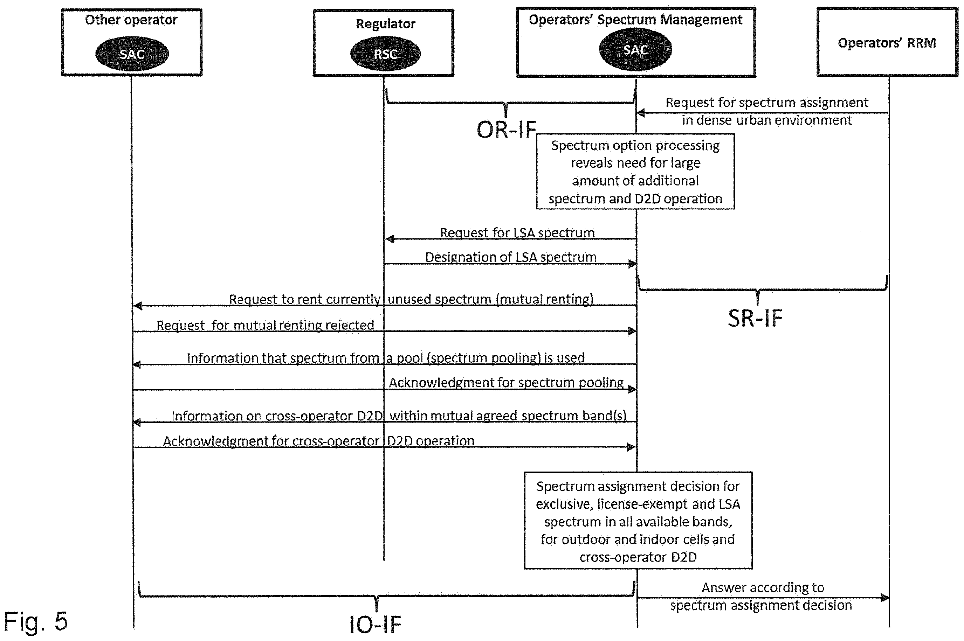

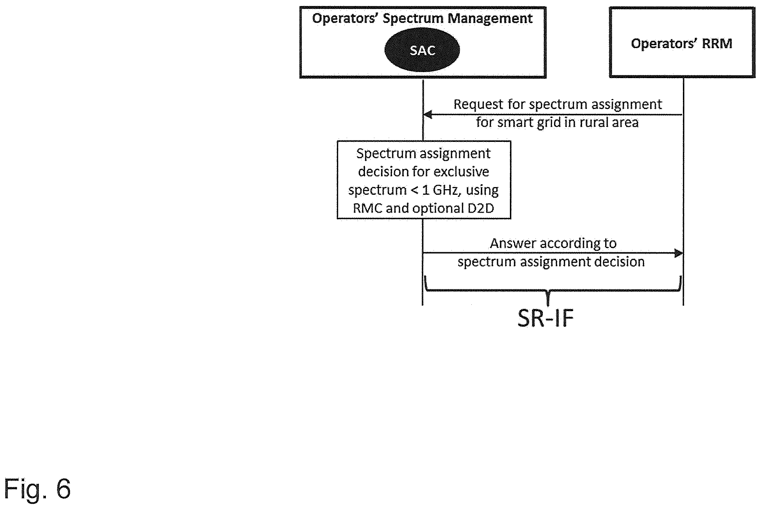

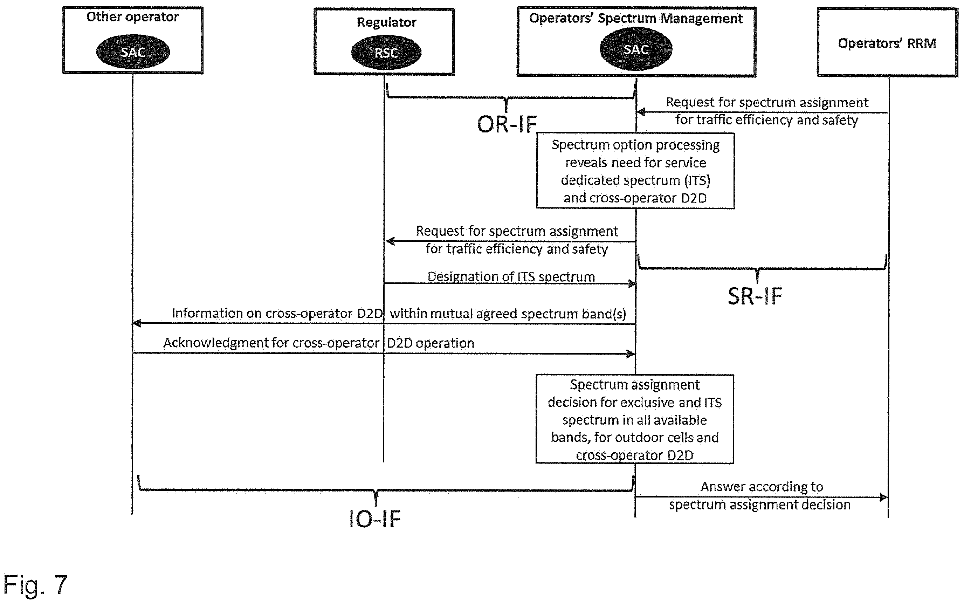

The interworking between the spectrum assignment coordination (SAC) entity and the functional entities outside the spectrum management of the network operator will be illustrated using sequence charts for representative use cases and applications in the following. The examples to be illustrated are dense urban environment in Fig. 5, smart grid in rural areas in Fig. 6, and traffic efficiency and safety in Fig. 7. Within these examples, not only operator-internal processing, but also the coordination with the regulator and a spectrum assignment coordination (SAC) entity of another network operator is covered.

Fig. 5 shows a method for assigning frequency spectrum for communication within a mobile communication network using a network entity. The diagram illustrates a sequence chart for frequency spectrum assignment in a dense urban environment.

The spectrum assignment coordination (SAC) entity can receive a request signal for frequency spectrum assignment. The processing within the spectrum assignment coordination (SAC) entity in interaction with the functional entities within the spectrum management of the network operator may reveal that a large amount of additional spectrum is needed, and that also cross-operator D2D operation, e.g. for machine-to-machine (M2M) communication, is required. Therefore, a regulatory spectrum assignment request signal can be sent to the regulator for the designation of licensed shared access (LSA) spectrum which can be answered positively with a corresponding regulatory spectrum assignment answer signal indicating the spectrum designation.

The spectrum assignment coordination (SAC) entity can further transmit an inter-operator spectrum assignment request signal to a further spectrum assignment coordination (SAC) entity of another network operator and receive an inter-operator spectrum assignment answer signal from the further spectrum assignment coordination (SAC) entity. In this example, the request for renting currently unused frequency bands from the other network operator is rejected. In addition, the spectrum assignment coordination (SAC) entity of the other network operator can be informed about the usage of frequency bands out of a common spectrum pool and cross-operator D2D operation within mutual agreed frequency bands, which is acknowledged in this example.

Thus, the spectrum assignment coordination (SAC) entity can take the decision to assign exclusively licensed, license-exempt and licensed shared access (LSA) frequency spectrum for usage in all frequency bands available for outdoor and indoor cells, including cross-operator D2D operation for machine-to-machine (M2M) communications.

Fig. 6 shows a method for assigning frequency spectrum for communication within a mobile communication network using a network entity. The diagram illustrates a sequence chart for frequency spectrum assignment for a smart grid in a rural area.

The spectrum assignment coordination (SAC) entity can receives a spectrum assignment request signal for spectrum assignment from the radio resource management (RRM) entity. The processing within the spectrum assignment coordination (SAC) entity in interaction with the functional entities within the spectrum management of the network operator results in a decision to assign exclusively licensed spectrum below 1 GHz for this use case, for rural macro cell operation and optional device-to-device (D2D) operation in the case of communication directly between machine-type communication (MTC) devices.

Fig. 7 shows a method for assigning frequency spectrum for communication within a mobile communication network using a network entity. The diagram illustrates a sequence chart for frequency spectrum assignment for traffic efficiency and safety applications.

The spectrum assignment coordination (SAC) entity can receive a spectrum assignment request signal for frequency spectrum assignment from the radio resource management (RRM) entity. The processing within the spectrum assignment coordination (SAC) entity in interaction with the functional entities within the spectrum management of the network operator may reveal that service dedicated spectrum, e.g. intelligent transportation systems (ITS) spectrum in this example, and also cross-operator D2D operation, e.g. for vehicle-to-vehicle (V2V) communication in this example, is needed. Therefore, a regulatory spectrum assignment request signal is sent to the regulator for the designation of intelligent transportation systems (ITS) spectrum which is answered positively in this example. In addition, a spectrum assignment coordination (SAC) entity of another network operator can be informed about cross-operator D2D operation within mutual agreed frequency bands which is acknowledged in this example.

Thus, the spectrum assignment coordination (SAC) entity can take the decision to assign exclusively licensed and intelligent transportation systems (ITS) spectrum for usage in all frequency bands available for outdoor cells, including cross-operator D2D operation for vehicle-to-vehicle (V2V) communications.

In summary, the invention relates to a spectrum management architecture for use by a network operator comprising a central spectrum assignment coordination (SAC) entity, which can be supported by:
- a service-specific spectrum requirements (SSR) entity providing information on service-specific requirements, in particular user group specific requirements,
- a spectrum resource storage (SRS) entity providing information about frequency band availability,
- a spectrum usage rules (SUR) entity comprising a spectrum access modes (SAM) entity and a network deployment scenarios (NDS) entity based on the spectrum management policy of the network operator,
- a spectrum sharing enablers (SSE) entity for usage tools, and
- an inter-operator coordination functions (ICF) entity for usage tools.

The logical interworking between the different entities within the spectrum management of the network operator has been described. Furthermore, the logical interworking between the network operator and the regulator via the operator to regulator interface (OR-IF), the inter-operator interface (IO-IF) and the interface between the spectrum management of the network operator and the radio resource management (RRM) entity, i.e. the SR-IF, has been defined.

An entity at the regulator, i.e. a regulatory spectrum coordination (RSC) entity, and other elements like e.g. a geolocation database (GLDB) can be used. Furthermore, specific protocols and algorithms for data exchange over the interface between the operator and the regulator, i.e. the OR-IF, the inter-operator interface (IO-IF) and the interface between the spectrum management of the network operator and the radio resource management (RRM) entity, i.e. the SR-IF, can be implemented. In addition, specific procedures within the radio resource management (RRM) entity of the network operator can be applied.

### REFERENCE SIGNS

- 100: Network entity

- 200: Method
- 201: Providing
- 203: Receiving
- 205: Retrieving
- 207: Determining
- 209: Generating
- 211: Transmitting

- SAC: Spectrum assignment coordination (entity)
- SSR: Service-specific spectrum requirements (entity)
- SRS: Spectrum resource storage (entity)
- SUR: Spectrum usage rules (entity)
- SAM: Spectrum access modes (entity)
- NDS: Network deployment scenarios (entity)
- SSE: Spectrum sharing enablers (entity)
- ICF: Inter-operator coordination functions (entity)
- RSC: Regulatory spectrum coordination (entity)
- UE: User equipment

## Claims

1. A network entity (100) for assigning frequency spectrum for communication within a mobile communication network, the communication within the mobile communication network to be performed according to a requested communication service of a plurality of communication services, the communication within the mobile communication network to be performed between a first user equipment (UE) and a second user equipment (UE), the network entity (100) comprising:
a service-specific spectrum requirements (SSR) entity configured
- to store a predetermined mapping between a plurality of service-specific requirements and the plurality of communication services, wherein each communication service is associated with at least one service-specific requirement; and
a spectrum assignment coordination (SAC) entity configured
- to receive a spectrum assignment request signal from a radio resource management (RRM) entity, the spectrum assignment request signal indicating the requested communication service, a first geographic location of the first user equipment (UE), and a second geographic location of the second user equipment (UE),
- to retrieve a service-specific requirement corresponding to the requested communication service from the service-specific spectrum requirements (SSR) entity,
- to determine the frequency spectrum upon the basis of the requested communication service, the retrieved service-specific requirement, the first geographic location, and the second geographic location,
- to generate a spectrum assignment answer signal indicating the determined frequency spectrum, and
- to transmit the spectrum assignment answer signal to the radio resource management (RRM) entity for assigning the frequency spectrum for the communication within the mobile communication network.

2. The network entity (100) of claim 1, further comprising:
a spectrum resource storage (SRS) entity configured
- to store a predetermined mapping between a plurality of available frequency bands and the plurality of communication services, wherein each communication service is associated with at least one available frequency band;
wherein the spectrum assignment coordination (SAC) entity is configured
- to retrieve an available frequency band corresponding to the requested communication service from the spectrum resource storage (SRS) entity, and
- to determine the frequency spectrum further upon the basis of the retrieved available frequency band.

3. The network entity (100) of any one of the preceding claims, further comprising a spectrum usage rules (SUR) entity, the spectrum usage rules (SUR) entity comprising:
a spectrum access modes (SAM) entity configured
- to store a predetermined mapping between a plurality of spectrum access modes and the plurality of communication services, wherein each communication service is associated with at least one spectrum access mode;
wherein the spectrum assignment coordination (SAC) entity is configured
- to retrieve a spectrum access mode corresponding to the requested communication service from the spectrum access modes (SAM) entity, and
- to determine the frequency spectrum further upon the basis of the retrieved spectrum access mode.

4. The network entity (100) of claim 3, wherein the spectrum usage rules (SUR) entity further comprises:
a network deployment scenarios (NDS) entity configured
- to store a predetermined mapping between a plurality of network deployment scenarios and the plurality of communication services, wherein each communication service is associated with at least one network deployment scenario;
wherein the spectrum assignment coordination (SAC) entity is configured
- to retrieve a network deployment scenario corresponding to the requested communication service from the network deployment scenarios (NDS) entity, and
- to determine the frequency spectrum further upon the basis of the retrieved network deployment scenario.

5. The network entity (100) of any one of the preceding claims, further comprising:
a spectrum sharing enablers (SSE) entity configured
- to store a predetermined mapping between a plurality of spectrum sharing modes and the plurality of communication services, wherein each communication service is associated with at least one spectrum sharing mode;
wherein the spectrum assignment coordination (SAC) entity is configured
- to retrieve a spectrum sharing mode corresponding to the requested communication service from the spectrum sharing enablers (SSE) entity, and
- to determine the frequency spectrum further upon the basis of the retrieved spectrum sharing mode.

6. The network entity (100) of any one of the preceding claims, further comprising:
an inter-operator coordination functions (ICF) entity configured
- to store a predetermined mapping between a plurality of inter-operator spectrum utilization modes and the plurality of communication services, wherein each communication service is associated with at least one inter-operator spectrum utilization mode;
wherein the spectrum assignment coordination (SAC) entity is configured
- to retrieve an inter-operator spectrum utilization mode corresponding to the requested communication service from the inter-operator coordination functions (ICF) entity, and
- to determine the frequency spectrum further upon the basis of the retrieved inter-operator spectrum utilization mode.

7. The network entity (100) of any one of the preceding claims, wherein the spectrum assignment coordination (SAC) entity is connectable to a regulatory spectrum coordination (RSC) entity, and wherein the spectrum assignment coordination (SAC) entity is configured
- to transmit a regulatory spectrum assignment request signal to the regulatory spectrum coordination (RSC) entity, the regulatory spectrum assignment request signal indicating a requested frequency band,
- to receive a regulatory spectrum assignment answer signal from the regulatory spectrum coordination (RSC) entity, the regulatory spectrum assignment answer signal indicating a granting, in particular an acknowledgement or a rejection, of the requested frequency band, and
- to determine the frequency spectrum further upon the basis of the granting, in particular the acknowledgement or the rejection, of the requested frequency band.

8. The network entity (100) of any one of the preceding claims, wherein the spectrum assignment coordination (SAC) entity is connectable to a further spectrum assignment coordination (SAC) entity, wherein the spectrum assignment coordination (SAC) entity is configured
- to transmit an inter-operator spectrum assignment request signal to the further spectrum assignment coordination (SAC) entity, the inter-operator spectrum assignment request signal indicating a requested frequency band,
- to receive an inter-operator spectrum assignment answer signal from the further spectrum assignment coordination (SAC) entity, the inter-operator spectrum assignment answer signal indicating a granting, in particular an acknowledgement or a rejection, of the requested frequency band, and
- to determine the frequency spectrum further upon the basis of the granting, in particular the acknowledgement or the rejection, of the requested frequency band.

9. The network entity (100) of claim 8, wherein the inter-operator spectrum assignment request signal further indicates a requested mutual renting of the requested frequency band, wherein the inter-operator spectrum assignment answer signal further indicates a granting, in particular an acknowledgement or a rejection, of the requested mutual renting of the requested frequency band, and wherein the spectrum assignment coordination (SAC) entity is configured
- to determine the frequency spectrum further upon the basis of the granting, in particular the acknowledgement or the rejection, of the requested mutual renting of the requested frequency band.

10. The network entity (100) of any one of the claims 8 or 9, wherein the inter-operator spectrum assignment request signal further indicates a requested cross-operator D2D operation within the requested frequency band, wherein the inter-operator spectrum assignment answer signal further indicates a granting, in particular an acknowledgement or a rejection, of the requested cross-operator D2D operation within the requested frequency band, and wherein the spectrum assignment coordination (SAC) entity is configured
- to determine the frequency spectrum further upon the basis of the granting, in particular the acknowledgement or the rejection, of the requested cross-operator D2D operation within the requested frequency band.

11. The network entity (100) of any one of the claims 8 to 10, wherein a spectrum pool is associated with the spectrum assignment coordination (SAC) entity and the further spectrum assignment coordination (SAC) entity, wherein the spectrum pool comprises a plurality of frequency bands, and wherein the spectrum assignment coordination (SAC) entity is configured
- to select a frequency band from the spectrum pool, and
- to determine the frequency spectrum further upon the basis of the selected frequency band.

12. The network entity (100) of any one of the preceding claims, wherein the mobile communication network is a fifth generation (5G) mobile communication network.

13. A method (200) for assigning frequency spectrum for communication within a mobile communication network using a network entity (100), the network entity (100) comprising a service-specific spectrum requirements (SSR) entity and a spectrum assignment coordination (SAC) entity, the communication within the mobile communication network to be performed according to a requested communication service of a plurality of communication services, the communication within the mobile communication network to be performed between a first user equipment (UE) and a second user equipment (UE), the method (200) comprising:
providing (201) a predetermined mapping between a plurality of service-specific requirements and the plurality of communication services by the service-specific spectrum requirements (SSR) entity, wherein each communication service is associated with at least one service-specific requirement;
receiving (203) a spectrum assignment request signal from a radio resource management (RRM) entity by the spectrum assignment coordination (SAC) entity, the spectrum assignment request signal indicating the requested communication service, a first geographic location of the first user equipment (UE), and a second geographic location of the second user equipment (UE);
retrieving (205) a service-specific requirement corresponding to the requested communication service from the service-specific spectrum requirements (SSR) entity by the spectrum assignment coordination (SAC) entity;
determining (207) the frequency spectrum upon the basis of the requested communication service, the retrieved service-specific requirement, the first geographic location, and the second geographic location by the spectrum assignment coordination (SAC) entity;
generating (209) a spectrum assignment answer signal indicating the determined frequency spectrum by the spectrum assignment coordination (SAC) entity; and
transmitting (211) the spectrum assignment answer signal to the radio resource management (RRM) entity by the spectrum assignment coordination (SAC) entity for assigning the frequency spectrum for the communication within the mobile communication network.

14. A computer program comprising a program code for performing the method (200) of claim 13 when executed on a computer.

## Patentansprüche

1. Netzwerkeinheit (100) zum Zuweisen eines Frequenzspektrums zur Kommunikation innerhalb eines Mobilkommunikationsnetzwerks, wobei die Kommunikation innerhalb des Mobilkommunikationsnetzwerks gemäß einem angeforderten Kommunikationsdienst von mehreren Kommunikationsdiensten durchgeführt werden soll, wobei die Kommunikation innerhalb des Mobilkommunikationsnetzwerks zwischen einer ersten Benutzereinrichtung (UE) und einer zweiten Benutzereinrichtung (UE) durchgeführt werden soll, wobei die Netzwerkeinheit (100) aufweist:
eine Einheit dienstspezifischer Spektrum-Anforderungen (SSR), die konfiguriert ist
- eine vorbestimmte Zuordnung zwischen mehreren dienstspezifischen Anforderungen und den mehreren Kommunikationsdiensten zu speichern, wobei jeder Kommunikationsdienst mit mindestens einer dienstspezifischen Anforderung verknüpft ist; und
eine Einheit zur Koordination einer Spektrum-Zuweisung (SAC), die konfiguriert ist
- ein Spektrum-Zuweisungsanforderungssignal von einer Funkressourcenverwaltungs-(RRM) Einheit zu empfangen, wobei das Spektrum-Zuweisungsanforderungssignal den angeforderten Kommunikationsdienst, einen ersten geografischen Standort der ersten Benutzereinrichtung (UE) und einen zweiten geografischen Standort der zweiten Benutzereinrichtung (UE) anzeigt,
- eine dienstspezifische Anforderung, die dem angeforderten Kommunikationsdienst entspricht, von der Einheit dienstspezifischer Spektrum-Anforderungen (SSR) abzurufen,
- das Frequenzspektrum auf der Grundlage des angeforderten Kommunikationsdienstes, der abgerufenen dienstspezifischen Anforderung, des ersten geografischen Standorts und des zweiten geografischen Standorts zu bestimmen,
- ein Spektrum-Zuweisungsantwortsignal zu erzeugen, das das bestimmte Frequenzspektrum anzeigt, und
- das Spektrum-Zuweisungsantwortsignal an die Funkressourcenverwaltungs- (RRM) Einheit zum Zuweisen des Frequenzspektrums für die Kommunikation innerhalb des Mobilkommunikationsnetzwerks zu senden.

2. Netzwerkeinheit (100) nach Anspruch 1, die ferner aufweist:
eine Spektrum-Ressourcenspeicher- (SRS) Einheit, die konfiguriert ist
- eine vorbestimmte Zuordnung zwischen mehreren verfügbaren Frequenzbändern und den mehreren Kommunikationsdiensten zu speichern, wobei jeder Kommunikationsdienst mit mindestens einem verfügbaren Frequenzband verknüpft ist;
wobei die Einheit zur Koordination einer Spektrum-Zuweisung (SAC) konfiguriert ist
- ein verfügbares Frequenzband, das dem angeforderten Kommunikationsdienst entspricht, von der Spektrum-Ressourcenspeicher- (SRS) Einheit abzurufen, und
- das Frequenzspektrum ferner auf der Grundlage des abgerufenen verfügbaren Frequenzband zu bestimmen.

3. Netzwerkeinheit (100) nach einem der vorhergehenden Ansprüche, die ferner eine Spektrum-Nutzungsregel- (SUR) Einheit aufweist, wobei die Spektrum-Nutzungsregel-(SUR) Einheit aufweist:
eine Spektrum-Zugriffsmoden- (SAM) Einheit, die konfiguriert ist
- eine vorbestimmte Zuordnung zwischen mehreren Spektrum-Zugriffsmoden und den mehreren Kommunikationsdiensten zu speichern, wobei jeder Kommunikationsdienst mit mindestens einem Spektrum-Zugriffsmodus verknüpft ist;
wobei die Einheit zur Koordination einer Spektrum-Zuweisung (SAC) konfiguriert ist
- einen Spektrum-Zugriffsmodus, der dem angeforderten Kommunikationsdienst entspricht, von der Spektrum-Zugriffsmoden- (SAM) Einheit abzurufen, und
- das Frequenzspektrum ferner auf der Grundlage des abgerufenen Spektrum-Zugriffsmodus zu bestimmen.

4. Netzwerkeinheit (100) nach Anspruch 3, wobei die Spektrum-Nutzungsregel- (SUR) Einheit ferner aufweist:
eine Netzwerk-Einsatzszenarien- (NDS) Einheit, die konfiguriert ist
- eine vorbestimmte Zuordnung zwischen mehreren Netzwerk-Einsatzszenarien und den mehreren Kommunikationsdiensten zu speichern, wobei jeder Kommunikationsdienst mit mindestens einem Netzwerk-Einsatzszenario verknüpft ist;
wobei die Einheit zur Koordination einer Spektrum-Zuweisung (SAC) konfiguriert ist
- ein Netzwerk-Einsatzszenario, die dem angeforderten Kommunikationsdienst entspricht, von der Netzwerk-Einsatzszenarien- (NDS) Einheit abzurufen, und
- das Frequenzspektrum ferner auf der Grundlage des abgerufenen Netzwerk-Einsatzszenarios zu bestimmen.

5. Netzwerkeinheit (100) nach einem der vorhergehenden Ansprüche, die ferner aufweist:
eine Einheit zur Freigabe einer gemeinsamen Spektrum-Nutzung (SSE), die konfiguriert ist
- eine vorbestimmte Zuordnung zwischen mehreren Moden einer gemeinsamen Spektrum-Nutzung und den mehreren Kommunikationsdiensten zu speichern, wobei jeder Kommunikationsdienst mit mindestens einem Modus einer gemeinsamen Spektrum-Nutzung verknüpft ist;
wobei die Einheit zur Koordination einer Spektrum-Zuweisung (SAC) konfiguriert ist
- einen Modus einer gemeinsamen Spektrum-Nutzung, der dem angeforderten Kommunikationsdienst entspricht, von der Einheit zur Freigabe einer gemeinsamen Spektrum-Nutzung (SSE) abzurufen, und
- das Frequenzspektrum ferner auf der Grundlage des abgerufenen Modus einer gemeinsamen Spektrum-Nutzung zu bestimmen.

6. Netzwerkeinheit (100) nach einem der vorhergehenden Ansprüche, die ferner aufweist:
eine Einheit zur Koordinationsfunktion zwischen Betreibern (ICF), die konfiguriert ist
- eine vorbestimmte Zuordnung zwischen mehreren Spektrum-Nutzungsmoden zwischen Betreibern und den mehreren Kommunikationsdiensten zu speichern, wobei jeder Kommunikationsdienst mit mindestens einem Spektrum-Nutzungsmodus zwischen Betreibern verknüpft ist;
wobei die Einheit zur Koordination einer Spektrum-Zuweisung (SAC) konfiguriert ist
- einen Spektrum-Nutzungsmodus zwischen Betreibern, der dem angeforderten Kommunikationsdienst entspricht, von der Einheit zur Koordinationsfunktion zwischen Betreibern (ICF) abzurufen, und
- das Frequenzspektrum ferner auf der Grundlage des abgerufenen Spektrum-Nutzungsmodus zwischen Betreibern zu bestimmen.

7. Netzwerkeinheit (100) nach einem der vorhergehenden Ansprüche, wobei die Einheit zur Koordination einer Spektrum-Zuweisung (SAC) mit einer regulatorischen Spektrum-Koordinations- (RSC) Einheit verbindbar ist, und wobei die Einheit zur Koordination einer Spektrum-Zuweisung (SAC) konfiguriert ist
- ein regulatorisches Spektrum-Zuweisungsanforderungssignal an die regulatorische Spektrum-Koordinations- (RSC) Einheit zu senden, wobei das regulatorische Spektrum-Zuweisungsanforderungssignal ein angefordertes Frequenzband anzeigt,
- ein regulatorisches Spektrum-Zuweisungsantwortsignal von der regulatorischen Spektrum-Koordinations- (RSC) Einheit zu empfangen, wobei das regulatorische Spektrum-Zuweisungsantwortsignal eine Vergabe, insbesondere eine Bestätigung oder eine Zurückweisung, des angeforderten Frequenzbandes anzeigt, und
- das Frequenzspektrum ferner auf der Grundlage der Vergabe, insbesondere der Bestätigung oder der Zurückweisung, des angeforderten Frequenzbandes zu bestimmen.

8. Netzwerkeinheit (100) nach einem der vorhergehenden Ansprüche, wobei die Einheit zur Koordination einer Spektrum-Zuweisung (SAC) mit einer weiteren Einheit zur Koordination einer Spektrum-Zuweisung (SAC) verbindbar ist, wobei die Einheit zur Koordination einer Spektrum-Zuweisung (SAC) konfiguriert ist
- ein Spektrum-Zuweisungsanforderungssignal zwischen Betreibern an die weitere Einheit zur Koordination einer Spektrum-Zuweisung (SAC) zu senden, wobei das Spektrum-Zuweisungsanforderungssignal zwischen Betreibern ein angefordertes Frequenzband anzeigt,
- ein Spektrum-Zuweisungsantwortsignal zwischen Betreibern von der weiteren Einheit zur Koordination einer Spektrum-Zuweisung (SAC) zu empfangen, wobei das Spektrum-Zuweisungsantwortsignal zwischen Betreibern eine Vergabe, insbesondere eine Bestätigung oder eine Zurückweisung, des angeforderten Frequenzbandes anzeigt, und
- das Frequenzspektrum ferner auf der Grundlage der Vergabe, insbesondere der Bestätigung oder der Zurückweisung, des angeforderten Frequenzbandes zu bestimmen.

9. Netzwerkeinheit (100) nach Anspruch 8, wobei das Spektrum-Zuweisungsanforderungssignal zwischen Betreibern ferner eine angeforderte gegenseitige Vermietung des angeforderten Frequenzbandes anzeigt, wobei das Spektrum-Zuweisungsantwortsignal zwischen Betreibern ferner eine Vergabe, insbesondere eine Bestätigung oder eine Zurückweisung, der angeforderten gegenseitigen Vermietung des angeforderten Frequenzbandes anzeigt, und wobei die Einheit zur Koordination einer Spektrum-Zuweisung (SAC) konfiguriert ist
- das Frequenzspektrum ferner auf der Grundlage der Vergabe, insbesondere der Bestätigung oder der Zurückweisung, der angeforderten gegenseitigen Vermietung des angeforderten Frequenzbandes zu bestimmen.

10. Netzwerkeinheit (100) nach einem der Ansprüche 8 oder 9, wobei das Spektrum-Zuweisungsanforderungssignal zwischen Betreibern ferner einen angeforderten betreiberübergreifenden D2D-Betrieb innerhalb des angeforderten Frequenzbandes anzeigt, wobei das Spektrum-Zuweisungsantwortsignal zwischen Betreibern ferner eine Vergabe, insbesondere eine Bestätigung oder eine Zurückweisung, des angeforderten betreiberübergreifenden D2D-Betriebs innerhalb das angeforderten Frequenzbandes anzeigt, und wobei die Einheit zur Koordination einer Spektrum-Zuweisung (SAC) konfiguriert ist
- das Frequenzspektrum ferner auf der Grundlage der Vergabe, insbesondere der Bestätigung oder der Zurückweisung, des angeforderten betreiberübergreifenden D2D-Betriebs innerhalb des angeforderten Frequenzbandes zu bestimmen.

11. Netzwerkeinheit (100) nach einem der Ansprüche 8 bis 10, wobei ein Spektrum-Pool mit der Einheit zur Koordination einer Spektrum-Zuweisung (SAC) und der weiteren Einheit zur Koordination einer Spektrum-Zuweisung (SAC) verknüpft ist, wobei der Spektrum-Pool mehrere Frequenzbänder aufweist, und wobei die Einheit zur Koordination einer Spektrum-Zuweisung (SAC) konfiguriert ist
- ein Frequenzband aus dem Spektrum-Pool auszuwählen, und
- das Frequenzspektrum ferner auf der Grundlage des ausgewählten Frequenzbandes zu bestimmen.

12. Netzwerkeinheit (100) nach einem der vorhergehenden Ansprüche, wobei das Mobilkommunikationsnetzwerk ein Mobilkommunikationsnetzwerk der fünften Generation (5G) ist.

13. Verfahren (200) zum Zuweisen eines Frequenzspektrums zur Kommunikation innerhalb eines Mobilkommunikationsnetzwerks unter Verwendung einer Netzwerkeinheit (100), wobei die Netzwerkeinheit (100) eine Einheit dienstspezifischer Spektrum-Anforderungen (SSR) und eine Einheit zur Koordination einer Spektrum-Zuweisung (SAC) aufweist, wobei die Kommunikation innerhalb des Mobilkommunikationsnetzwerks gemäß einem angeforderten Kommunikationsdienst von mehreren Kommunikationsdiensten durchgeführt werden soll, wobei die Kommunikation innerhalb des Mobilkommunikationsnetzwerks zwischen einer ersten Benutzereinrichtung (UE) und einer zweiten Benutzereinrichtung (UE) durchgeführt werden soll, wobei das Verfahren (200) aufweist:
Bereitstellen (201) einer vorbestimmten Zuordnung zwischen mehreren dienstspezifischen Anforderungen und den mehreren Kommunikationsdiensten durch die Einheit dienstspezifischer Spektrum-Anforderungen (SSR), wobei jeder Kommunikationsdienst mit mindestens einer dienstspezifischen Anforderung verknüpft ist;
Empfangen (203) eines Spektrum-Zuweisungsanforderungssignals von einer Funkressourcenverwaltungs- (RRM) Einheit durch die Einheit zur Koordination einer Spektrum-Zuweisung (SAC), wobei das Spektrum-Zuweisungsanforderungssignal den angeforderten Kommunikationsdienst, einen ersten geografischen Standort der ersten Benutzereinrichtung (UE) und einen zweiten geografischen Standort der zweiten Benutzereinrichtung (UE) anzeigt;
Abrufen (205) einer dienstspezifischen Anforderung, die dem angeforderten Kommunikationsdienst entspricht, von der Einheit dienstspezifischer Spektrum-Anforderungen (SSR) durch die Einheit zur Koordination einer Spektrum-Zuweisung (SAC);
Bestimmen (207) des Frequenzspektrums auf der Grundlage des angeforderten Kommunikationsdienstes, der abgerufenen dienstspezifischen Anforderung, des ersten geografischen Standorts und des zweiten geografischen Standorts durch die Einheit zur Koordination einer Spektrum-Zuweisung (SAC);
Erzeugen (209) eines Spektrum-Zuweisungsantwortsignals, das das bestimmte Frequenzspektrum anzeigt, durch die Einheit zur Koordination einer Spektrum-Zuweisung (SAC); und
Senden (211) des Spektrum-Zuweisungsantwortsignals an die Funkressourcenverwaltungs- (RRM) Einheit durch die Einheit zur Koordination einer Spektrum-Zuweisung (SAC) zum Zuweisen des Frequenzspektrums für die Kommunikation innerhalb des Mobilkommunikationsnetzwerks.

14. Computerprogramm, das einen Programmcode zum Ausführen des Verfahrens (200) nach Anspruch 13 aufweist, wenn auf einem Computer ausgeführt.

## Revendications

1. Entité de réseau (100) pour l'attribution d'un spectre de fréquences afin de communiquer dans un réseau de communication mobile, la communication dans le réseau de communication mobile devant être établie conformément à un service de communication demandé d'une pluralité de services de communication, la communication dans le réseau de communication mobile devant être établie entre un premier équipement utilisateur (UE) et un deuxième équipement utilisateur (UE), ladite entité de réseau (100) comprenant :
une entité d'exigences de spectre spécifiques au service (SSR), prévue
- pour mémoriser un mappage prédéterminé entre une pluralité d'exigences spécifiques au service et la pluralité de services de communication, chaque service de communication étant associé à au moins une exigence spécifique au service ; et
une entité de coordination d'attribution de spectre (SAC) prévue
- pour recevoir un signal de demande d'attribution de spectre d'une entité de gestion de ressources radio (RRM), le signal de demande d'attribution de spectre indiquant le service de communication demandé, une première localisation géographique du premier équipement utilisateur (UE), et une deuxième localisation géographique du deuxième équipement utilisateur (UE),
- pour extraire une exigence spécifique au service correspondant au service de communication demandé de l'entité d'exigences de spectre spécifiques au service (SSR),
- pour déterminer le spectre de fréquences sur la base du service de communication demandé, de l'exigence spécifique au service extraite, de la première localisation géographique, et de la deuxième localisation géographique,
- pour générer un signal de réponse d'attribution de spectre indiquant le spectre de fréquences déterminé, et
- pour transmettre le signal de réponse d'attribution de spectre à l'entité de gestion de ressources radio (RRM) afin d'attribuer le spectre de fréquences pour la communication dans le réseau de communication mobile.

2. Entité de réseau (100) selon la revendication 1, comprenant en outre :
une entité de mémorisation de ressources de spectre (SRS) prévue
- pour mémoriser un mappage prédéterminé entre une pluralité de bandes de fréquence disponibles et la pluralité de services de communication, chaque service de communication étant associé à au moins une bande de fréquence disponible ;
l'entité de coordination d'attribution de spectre (SAC) étant prévue
- pour extraire une bande de fréquence disponible correspondant au service de communication demandé de l'entité de mémorisation de ressources de spectre (SRS), et
- pour déterminer en outre le spectre de fréquences sur la base de la bande de fréquence disponible extraite.

3. Entité de réseau (100) selon l'une des revendications précédentes, comprenant en outre une entité de règles d'utilisation du spectre (SUR), ladite entité de règles d'utilisation du spectre (SUR) comprenant :
une entité de modes d'accès au spectre (SAM) prévue
- pour mémoriser un mappage prédéterminé entre une pluralité de modes d'accès au spectre et la pluralité de services de communication, chaque service de communication étant associé à au moins un mode d'accès au spectre ;
l'entité de coordination d'attribution de spectre (SAC) étant prévue
- pour extraire un mode d'accès au spectre correspondant au service de communication demandé de l'entité de modes d'accès au spectre (SAM), et
- pour déterminer en outre le spectre de fréquences sur la base du mode d'accès au spectre extrait.

4. Entité de réseau (100) selon la revendication 3, où l'entité de règles d'utilisation du spectre (SUR) comprend en outre :
une entité de scénarios de déploiement de réseau (NDS) prévue
- pour mémoriser un mappage prédéterminé entre une pluralité de scénarios de déploiement de réseau et la pluralité de services de communication, chaque service de communication étant associé à au moins un scénario de déploiement de réseau ;
l'entité de coordination d'attribution de spectre (SAC) étant prévue
- pour extraire un scénario de déploiement de réseau correspondant au service de communication demandé de l'entité de scénarios de déploiement de réseau (NDS), et
- pour déterminer en outre le spectre de fréquences sur la base du scénario de déploiement de réseau extrait.

5. Entité de réseau (100) selon l'une des revendications précédentes, comprenant en outre :
une entité de facilitateurs de partage de spectre (SSE) prévue
- pour mémoriser un mappage prédéterminé entre une pluralité de modes de partage de spectre et la pluralité de services de communication, chaque service de communication étant associé à au moins un mode de partage de spectre ;
l'entité de coordination d'attribution de spectre (SAC) étant prévue
- pour extraire un mode de partage de spectre correspondant au service de communication demandé de l'entité de facilitateurs de partage de spectre (SSE), et
- pour déterminer en outre le spectre de fréquences sur la base du mode de partage de spectre extrait.

6. Entité de réseau (100) selon l'une des revendications précédentes, comprenant en outre :
une entité de fonctions de coordination inter-opérateurs prévue
- pour mémoriser un mappage prédéterminé entre une pluralité de modes d'utilisation de spectre inter-opérateurs et la pluralité de services de communication, chaque service de communication étant associé à au moins un mode d'utilisation de spectre inter-opérateurs ;
l'entité de coordination d'attribution de spectre (SAC) étant prévue
- pour extraire un mode d'utilisation de spectre inter-opérateurs correspondant au service de communication demandé de l'entité de fonctions de coordination inter-opérateurs, et
- pour déterminer en outre le spectre de fréquences sur la base du mode d'utilisation de spectre inter-opérateurs extrait.

7. Entité de réseau (100) selon l'une des revendications précédentes, où l'entité de coordination d'attribution de spectre (SAC) est connectable à une entité de coordination de spectre règlementaire (RSC), et où l'entité de coordination d'attribution de spectre (SAC) est prévue
- pour transmettre un signal de demande d'attribution de spectre règlementaire à l'entité de coordination de spectre règlementaire (RSC), ledit signal de demande d'attribution de spectre règlementaire indiquant une bande de fréquence demandée,
- pour recevoir un signal de réponse d'attribution de spectre règlementaire de l'entité de coordination de spectre règlementaire (RSC), ledit signal de réponse d'attribution de spectre règlementaire indiquant une autorisation, en particulier une confirmation ou un rejet, de la bande de fréquence demandée, et
- pour déterminer en outre le spectre de fréquences sur la base de l'autorisation, en particulier de la confirmation ou du rejet, de la bande de fréquence demandée.

8. Entité de réseau (100) selon l'une des revendications précédentes, où l'entité de coordination d'attribution de spectre (SAC) est connectable à une autre entité de coordination d'attribution de spectre (SAC), ladite entité de coordination d'attribution de spectre (SAC) étant prévue
- pour transmettre un signal de demande d'attribution de spectre inter-opérateurs à l'autre entité de coordination d'attribution de spectre (SAC), ledit signal de demande d'attribution de spectre inter-opérateurs indiquant une bande de fréquence demandée,
- pour recevoir un signal de réponse d'attribution de spectre inter-opérateurs de l'autre entité de coordination d'attribution de spectre (SAC), ledit signal de réponse d'attribution de spectre inter-opérateurs indiquant une autorisation, en particulier une confirmation ou un rejet, de la bande de fréquence demandée, et
- pour déterminer en outre le spectre de fréquences sur la base de l'autorisation, en particulier de la confirmation ou du rejet, de la bande de fréquence demandée.

9. Entité de réseau (100) selon la revendication 8, où le signal de demande d'attribution de spectre inter-opérateurs indique en outre une location réciproque demandée de la bande de fréquence demandée, le signal de réponse d'attribution de spectre inter-opérateurs indiquant en outre une autorisation, en particulier une confirmation ou un rejet de la location réciproque demandée de la bande de fréquence demandée, et l'entité de coordination d'attribution de spectre (SAC) étant prévue
- pour déterminer en outre le spectre de fréquences sur la base de l'autorisation, en particulier de la confirmation ou du rejet, de la location réciproque demandée de la bande de fréquence demandée.

10. Entité de réseau (100) selon la revendication 8 ou la revendication 9, où le signal de demande d'attribution de spectre inter-opérateurs indique en outre un fonctionnement inter-opérateurs en D2D demandé à l'intérieur de la bande de fréquence demandée, le signal de réponse d'attribution de spectre inter-opérateurs indiquant en outre une autorisation, en particulier une confirmation ou un rejet, du fonctionnement inter-opérateurs en D2D demandé à l'intérieur de la bande de fréquence demandée, et l'entité de coordination d'attribution de spectre (SAC) étant prévue
- pour déterminer en outre le spectre de fréquences sur la base de l'autorisation, en particulier de la confirmation ou du rejet, du fonctionnement inter-opérateurs en D2D demandé à l'intérieur de la bande de fréquence demandée.

11. Entité de réseau (100) selon l'une des revendications 8 à 10, où un pool de spectre est associé à l'entité de coordination d'attribution de spectre (SAC) et à l'autre entité de coordination d'attribution de spectre (SAC), ledit pool de spectre comprenant une pluralité de bandes de fréquence, et l'entité de coordination d'attribution de spectre (SAC) étant prévue
- pour sélectionner une bande de fréquence dans le pool de spectre, et
- pour déterminer en outre le spectre de fréquences sur la base de la bande de fréquence sélectionnée.

12. Entité de réseau (100) selon l'une des revendications précédentes, où le réseau de communication mobile est un réseau de communication mobile de cinquième génération (5G).

13. Procédé (200) pour l'attribution d'un spectre de fréquences for communication dans un réseau de communication mobile au moyen d'une entité de réseau (100), ladite entité de réseau (100) comprenant une entité d'exigences de spectre spécifiques au service (SSR) et une entité de coordination d'attribution de spectre (SAC), la communication dans le réseau de communication mobile devant être établie conformément à un service de communication demandé d'une pluralité de services de communication, la communication dans le réseau de communication mobile devant être établie entre un premier équipement utilisateur (UE) et un deuxième équipement utilisateur (UE), ledit procédé (200) comprenant :
la fourniture (201) d'un mappage prédéterminé entre une pluralité d'exigences spécifiques au service et la pluralité de services de communication par l'entité d'exigences de spectre spécifiques au service (SSR), chaque service de communication étant associé à au moins une exigence spécifique au service ;
la réception (203) d'un signal de demande d'attribution de spectre d'une entité de gestion de ressources radio (RRM) par l'entité de coordination d'attribution de spectre (SAC), ledit signal de demande d'attribution de spectre indiquant le service de communication demandé, une première localisation géographique du premier équipement utilisateur (UE), et une deuxième localisation géographique du deuxième équipement utilisateur (UE) ;
l'extraction (205) d'une exigence spécifique au service correspondant au service de communication demandé de l'entité d'exigences de spectre spécifiques au service (SSR) par l'entité de coordination d'attribution de spectre (SAC) ;
la détermination (207) du spectre de fréquences sur la base du service de communication demandé, de l'exigence spécifique au service extraite, de la première localisation géographique, et de la deuxième localisation géographique par l'entité de coordination d'attribution de spectre (SAC) ;
la génération (209) d'un signal de réponse d'attribution de spectre indiquant le spectre de fréquences déterminé par l'entité de coordination d'attribution de spectre (SAC) ; et
la transmission (211) du signal de réponse d'attribution de spectre à l'entité de gestion de ressources radio (RRM) par l'entité de coordination d'attribution de spectre (SAC) pour l'attribution du spectre de fréquences pour la communication dans le réseau de communication mobile.

14. Programme informatique, comprenant un code programme pour l'exécution du procédé (200) selon la revendication 13 lorsque celui-ci est lancé sur un ordinateur.
